# EUROPÄISCHE PATENTSCHRIFT

(11) **EP 1 057 392 B1**
(45) Veröffentlichungstag und Bekanntmachung des Hinweises auf die Patenterteilung: **29.12.2004**
(21) Anmeldenummer: 00111158.2
(22) Anmeldetag: 24.05.2000
(51) Int. Cl.: A01B 49/06, A01C 7/20, A01C 7/00

(54) **Säkombination**
Combined seed drill
Machine agricole combinée de travail du sol et de semis

(30) Priorität: 26.05.1999 DE 19924100; 10.09.1999 DE 19943277
(43) Veröffentlichungstag der Anmeldung: 06.12.2000
(73) Patentinhaber: Amazonen-Werke H. Dreyer GmbH & Co. KG, 49205 Hasbergen (DE)
(72) Erfinder: Dreyer, Heinz, Dr., Dipl.-Ing., 49205 Hasbergen (DE)

(56) Entgegenhaltungen:
- EP-A- 0 796 553
- WO-A-85/05246
- WO-A-98/03053
- FR-A- 2 696 070
- US-A- 5 279 236

## Beschreibung

Die Erfindung betrifft eine Säkombination gemäß des Oberbegriffes des Anspruches 1. Mittels dieser Säkombination kann in einem Arbeitsgang der Boden bearbeitet, angedrückt und das Saatgut im Boden eingebracht werden kann. Eine derartige Säkombination in der FR-A- 26 96 070 beschrieben.

Der Erfindung liegt die Aufgabe zugrunde, eine einfach aufgebaute Säkombination zu schaffen, mittels der das Saatgut in einem verdichteten Boden eingebracht werden kann, wobei gleichzeitig eine gute Scharführung zur Einhaltung einer optimalen Ablagetiefe erreichbar ist.

Diese Aufgabe wird erfindungsgemäß durch die kennzeichnenden Merkmale des Anspruches 1 gelöst. Infolge dieser Maßnahme läßt sich in einfacher Weise eine einfach aufgebaute Säkombination schaffen. Des weiteren können sich die einzelnen Walzenräder auch bei unebenen Bodenoberflächen der Bodenoberfläche anpassen, so dass eine optimale streifenweise Verfestigung des Bodens gewährleisten ist. Den Scharen sind Einzelpackerrollen zugeordnet. Hierbei ist die Reihenfolge wichtig, zuerst die Packerrollen anzuordnen, und dahinter sich die Säschare jeweils in den von den Packerrollen verfestigten Bereich angeordnet. Durch die fluchtende Anordnung der Schare hinter den Packerrollen ergibt sich eine genaue Tiefenführung, auch auf lockeren und unebenen Böden für die Säschare, so daß eine genaue Ablagetiefe einhaltbar ist. Es wird nach dem Prinzip gearbeitet, erst Packen und danach erfolgt die Saatgutablage in die von den Säscharen in den von den Packerrollen verfestigten Bodenbereich gezogenen Saatfurchen. Die Rollen sind beabstandet zueinander angeordnet, so daß der Boden streifenweise verfestigt wird, wobei zwischen den verfestigten Streifen losere Bodenstreifen verbleiben. Diese dann aus lockerer Erde bestehenden Bodenstreifendämme werden durch die hinter den Säscharen angeordneten Saatstriegeln eingeebnet, in dem der lockere Boden der Dämme dazu verwendet wird, die Saatkörner mit lockeren Boden zu bedecken. Durch die Einzelführung der Säschare durch die Rollen, wobei jeder Säschareinheit über eine Parallelogrammlenkeranordnung an einem Tragrahmen angelenkt ist, und die Packerrollenschareinheiten sich gegeneinander bewegen können, wird auch auf unebenen Bodenfläche eine sehr gleichmäßige Bodenverfestigung durch die Tiefenführungsrollen, die als Packerrollen ausgebildet sind, erreicht. Vor den Packerrollen ist ein Vorwerkzeug, beispielsweise bestehend aus einer Schleppzinkenbalkenanordnung, angeordnet. Es ist auch möglich, anstelle der Schleppzinken andere Bodenbearbeitungswerkzeuge, wie motorisch angetriebene Werkzeuge, beispielsweise Kreiseleggen, Kreiselgrubber, Fräsen, Rütteleggen etc. anzuordnen.

Wenn die Maschine im Dreipunktanbau am Schlepper angebaut ist, kann die Säkombination zum Straßentransport angehoben werden. Wenn die Säkombination als gezogene Maschine ausgebildet ist, weist sie ein Laufräder aufweisendes Fahrwerk auf.

Durch die Laufräder des Fahrwerkes ist ein einfacher Straßentransport möglich, denn die gezogene Säkombination stützt sich dann während des Transportes nicht auf den Tiefenführungsrollen ab. Während der Straßenfahrt werden also die Tiefenführungs- oder Packerrollen nicht zu den Laufrädem für die Straßenfahrt. Durch die Verwendung spezieller Laufräder des Fahrwerkes und spezieller Räder für die Packerrollen bzw. Tiefenführungsrollen können diese jeweiligen Räder optimal für jeweiligen Verwendungszwecke ausgelegt werden.

Um im Rahmen eines Baukastensystems die Drillmaschine auf einen Dreipunktanbau umbauen zu können bzw. für kleinere Arbeitsbreiten grundsätzlich als Dreipunktanbaumaschine im Rahmen eines Baukastensystems ausbilden zu können, ist vorgesehen, daß der Tragrahmen auf seiner Vorderseite ein Befestigungselement aufweist, an welchem wahlweise eine Zugdeichsel oder ein Dreipunktanbaubock befestigbar ist. Wenn die Drillmaschine als Dreipunktanbaumaschine ausgebildet ist, ist auf der Rückseite des Tragrahmens nicht ein Laufräder aufweisendes Fahrwerk vorgesehen.

Wenn die Säkombination als gezogene Version ausgebildet ist, ist in den Befestigungselementen auf der Vorderseite des Tragrahmens eine Zugdeichsel angeordnet und auf der Rückseite des Tragrahmens das Laufräder aufweisende Fahrwerk angeordnet. Hierbei ist das Fahrwerk mittels hydraulischer Zylinder anhebbar und absenkbar, und zwar in der Weise, daß die Laufräder des Fahrwerkes für die Arbeitsstellung mittels einer motorischen Schwenkeinrichtung nach vom oben bis in unmittelbare Nähe und dicht hinter den Vorratsbehälter schwenkbar ist. In der Transportstellung befinden sich die Laufräder des Fahrwerkes hinter den Säscharen.

Um in einfacher Weise die Eindringtiefe der Säschare in den Boden bzw. die Ablagetiefe des Saatguts im Boden einstellen zu können, ist den Säscharen und Tiefenführungsrollen eine zentrale Einstellvorrichtung zur Einstellung der Eindringtiefe der Säschare in den Boden zugeordnet.

Im Rahmen eines Baukastensystems sind auf dem Tragrahmen wahlweise ein mechanisch arbeitendes Sämodul oder ein pneumatisch arbeitendes Sämodul anordbar. Die Auswahl des jeweiligen Sämudoles richtet sich nach der Arbeitsbreite. Wenn die Arbeitsbreite 3 m beträgt, bzw. wenn eine starre Ausbildung der Säkombination einsetzt wird, die zum Transport nicht einklappbar ist, wird vorzugsweise ein mechanisch arbeitendes Sämodul verwendet, wobei andererseits, wenn die einzelnen Teile der Säkombination zum Transport einklappbar sind, vorzugsweise ein pneumatisch arbeitendes Sämodul eingesetzt wird.

Im Rahmen des Baukastensystems ist vorgesehen, daß auf dem Vorratsbehälter verschieden große Fassungsvermögen aufweisende Aufsatzbehälterteile aufsetzbar sind. Infolge dieser Maßnahme lassen sich verschiedene Varianten im Rahmen eines Baukastensystems in einfacher Weise verwirklichen.

Auch ergibt sich hierdurch eine optimale Tiefenführung der Säschare, selbst bei relativ hohen Fahrgeschwindigkeiten von 15 km/h und mehr.

Eine vorteilhafte Ausbildung der Walzenräder wird dadurch erreicht, daß die Halterungen der Walzenräder parallelogrammartig ausgebildet sind.

Eine einfache Tiefeneinstellung der Säschare läßt sich dadurch erreichen, daß die parallelogrammartige Halterungen an einem sich quer zur Fahrtrichtung erstreckenden Tragbalken mittels Gelenke angelenkt sind, daß der Tragbalken mittels Kuppeleinrichtung an dem Tragrahmen angebracht ist, das über die Kuppeleinrichtung der Tragbalken um eine quer zur Fahrtrichtung verlaufende Achse verschwenkbar und in verschiedenen Stellungen einstellbar ist.

Des weiteren ist vorgesehen, daß an den Befestigungselementen des Tragrahmens auf seiner Vorderseite Zusatzrahmen und / oder motorisch angetriebene Bodenbearbeitungswerkzeuge anordbar sind, so daß in einfacher Weise die Säkombination mit Bodenbearbeitungswerkzeugen verschiedenster Ausbildung kombinierbar ist, um die Maschine jeweils an die vorherrschenden Einsatzbedingungen anpassen zu können. Auch kann im Rahmen des Baukastensystems eine optimale Zusammenstellung der Säkombination zu einer Bestellkombination mit verschiedenen Bodenbearbeitungsgeräten verwirklicht werden.

Weitere Einzeleinheiten der Erfindung sind den übrigen Unteransprüchen, der Beispielsbeschreibung und den Zeichnungen zu entnehmen. Hierbei zeigen
- Fig. 1: die Säkombination in gezogener Ausführung, in Seitenansicht, Prinzipdarstellung und in Arbeitsstellung,
- Fig. 2: die Säkombination gemäß Fig. 1 in Transportstellung und in Seitenansicht,
- Fig. 3: die Säkombination in Dreipunktanbauausführung, in Seitenansicht und in Prinzipdarstellung und
- Fig. 4: die Säkombination mit vorgeordneter motorisch angetriebener Bodenbearbeitungsmaschine in Seitenansicht und in Prinzipdarstellung.

Die Säkombination weist den Tragrahmen 1 auf. Auf der Vorderseite des Tragrahmens 1 ist über die Befestigungselemente 2 der als Dreipunktanbaubock 3 ausgebildete Kuppelrahmen angeordnet. An diesem Kuppelrahmen 3 ist an den Kuppelpunkten über den Kuppelrahmen 3 an den den Befestigungselementen 2 die Zugdeichsel 4, die an eine Anhängevorrichtung eines Ackerschleppers ankuppelbar ist, angeordnet. Zwischen dem Rahmen 3 und der Zugdeichsel 4 ist die einstellbare Stütze 5 angeordnet.

Auf dem Tragrahmen 1 ist das mechnische Sämodul 6 mit dem Vorratsbehälter 7 und den Dosierelementen 8 angeordnet. Für kleine Arbeitsbreiten ist das dargestellte mechanische Sämodul 6 vorgesehen, während bei größeren Arbeitsbreiten, bei denen die einzelnen Seitenteile des Rahmens bzw. Tragrahmens in nicht dargestellter Weise zwecks Transportfahrt einklappbar sind, ein pneumatisch, jedoch nicht dargestelltes Sämodul auf dem Tragrahmen 1 angeordnet ist.

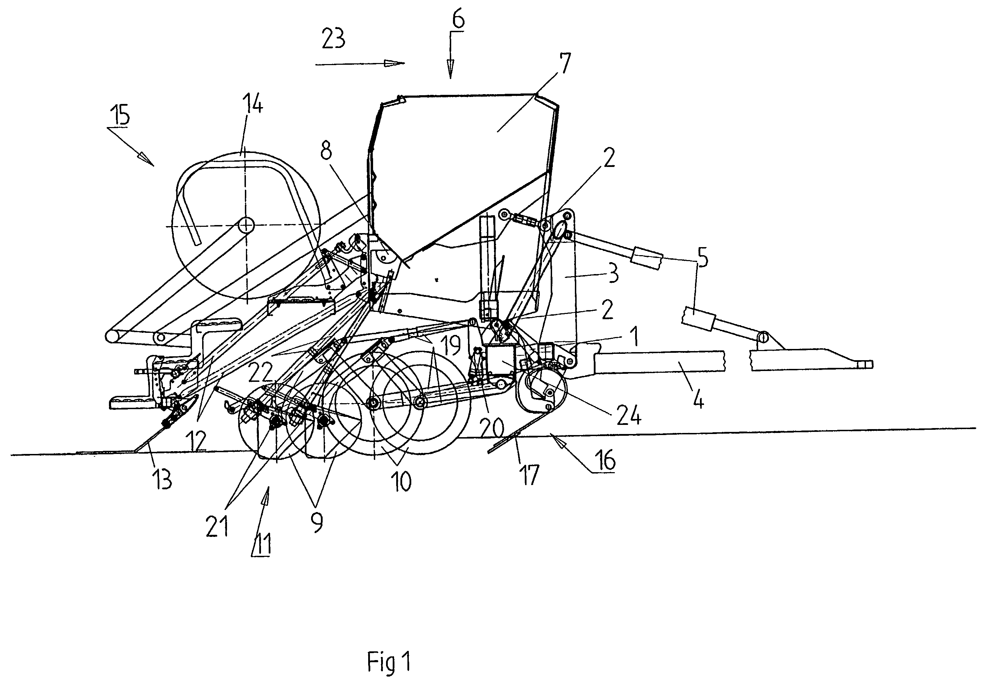

An dem Tragrahmen 1 ist die die Säschare 9 und die Tiefenführungsrollen 10 aufweisende Sävorrichtung 11 angeordnet. Hinter der Sävorrichtung 11 ist mittels des Gestänges 12 an dem Tragrahmen 1 der Saatstriegel 13 angeordnet. Des weiteren ist an dem Tragrahmen 1 hinter dem Striegel 13, das die Laufräder 14 aufweisende Fahrwerk 15 angeordnet, welches für die Transportstellung mittels einer nicht dargestellten motorischen Schwenkvorrichtung in die dargestellte Position schwenkbar ist. In dieser Position für die Arbeitsstellung befinden sich die Läufräder 14 des Fahrwerkes 15 in einer nach vorn oben und dicht hinter dem Vorratsbehälter 7 geschwenkten Stellung, wie Fig. 1 zeigt.

Vor der Sävorrichtung 11 ist eine Bodenbearbeitungsvorrichtung 16 mit den Bodenbearbeitungswerkzeuen, die als Schleppzinken 17 ausgebildet sind, angeordnet, um den Boden zu bearbeiten und einzuebnen. Die Sävorrichtung 11 besteht aus den nebeneinander angeordneten Packerwalzenrädern 10, die über Einzelschwingen 18 an dem Tragrahmen 1 angeordnet sind. Hierbei sind die Räder 10 durch die zu parallelogrammartigen Halterungen 19 zusammengefaßte Einzelschwingen 18 unabhängig voneinander in Höhenrichtung verschenkbar angeordnet. Die Walzenräder 10 sind versetzt zueinander angeordnet, wie Fig. 1 zeigt. Die unteren Streben 18 der parallelogrammartigen Halterungen 19 werden über die von den Hydraulikzylindern 20 ausgebildete Federeinrichtung gegen den Boden gedrückt. Hinter den als Tiefenführungsrollen ausgebildete Packerwalzenrädern 10 sind jeweils zwei Säschare 9 über eine Halterungsstrebe 21 zugeordnet. Die Halterungsstrebe 21 der Säschare 9 ist an den parallelogrammartigen Halterungen 19 der Walzenräder 10 befestigt. Die Packerrollen 10 führen die Säschare 9 jeweils in der Tiefe. Jedem Packerwalzenrad 10 sind zwei Säschare derart zugeordnet, daß sie in den von den Packerwalzenrädern 10 verfestigten Bereich Saatfurchen ziehen, in denen das aus dem Vorratsbehälter 7 von der Dosiereinrichtung 8 dosierte Material über die Saatleitungen 22 in die Säfurchen abgelegt wird.

Je nach Arbeitsbreite und Flächenleistung kann das Fassungsvermögen des Vorratsbehälters 7 durch nicht dargestellte Aufsatzbehälter vergrößert bzw. angepaßt werden.

Durch eine entsprechende Längeneinstellung der Stützstrebe 5, die zwischen der Zugdeichsel 4 und dem Rahmen 1 angeordnet ist, kann die Position des Tragrahmens 1 zur Waagerechten bzw. zur Vertikalen eingestellt werden, so daß durch diese Stellungsveränderung die Eindringtiefe der Säschare 9 in den Boden und somit Saatgutablagetiefe einstellbar ist.

Wie bereits erwähnt, besteht die Sävorrichtung 11 aus mehreren, nebeneinander angeordneten und unabhängig voneinander in Höhenrichtung zueinander bewegbaren, als Packerwalzenräder 10 ausgebildeten Walzenrädern bestehenden Walze und den Walzenrädern zugeordneten Säscharen 9. Die Walzenräder 10 sind mittels der parallelogrammartigen Halterung 19 an dem quer zur Fahrtrichtung verlaufenden Tragbalken 24 angelenkt. Die Säschare 9 hinter sind den Walzenrädern 10 mittels der Haltearme 21 an den parallelogrammartigen Halterungen 19 der Walzenräder 10 angeordnet. Hierbei können die Säschare 9 hinter den Walzenrädern 10 mittels Haltearme 19 über Gelenkverbindungen an den Halterungen 19 der Walzenräder 10 angeordnet sein und mittels zwischen den Halterungen 19 und den Haltearmen 19 angeordneten Federeinrichtungen in Richtung des Bodens gedrückt werden. Um eine gleichmäßige Tiefenführung der Säschare 9 zu erreichen, sind die Halterungen 19 der Walzenräder 10 parallelogrammartig ausgebildet. Eine besonders vorteilhafte Anordnung ergibt sich dadurch, daß jedem Walzenrad 10 zwei Säschare 9 zugeordnet sind, wobei diese Säschare 9 in den von den Walzenrädern 10 verfestigten Bodenbereich angeordnet sind.

In nicht dargestellter Weise kann der Tragbalken 24, an dem die parallelogrammartigen Halterungen 19 für die Sävorrichtung 11 angeordnet sind, mittels Gelenke an dem Tragrahmen 1 angeordnet sein, und um eine quer zur Fahrtrichtung 23 verlaufende Schwenkachse mittels einer nicht dargestellten Stellvorrichtung gegenüber dem Tragrahmen 1 verschwenkt werden, so daß der Tragbalken 24 in verschiedenen Stellungen einstellbar ist, um so die Eindringtiefe der Säschare 9 in den Boden gegenüber den Aufstandsfläche der Walzenräder 10 auf den Boden einzustellen. Diese Einstellung kann auch durch die Stütze 5 erfolgen.

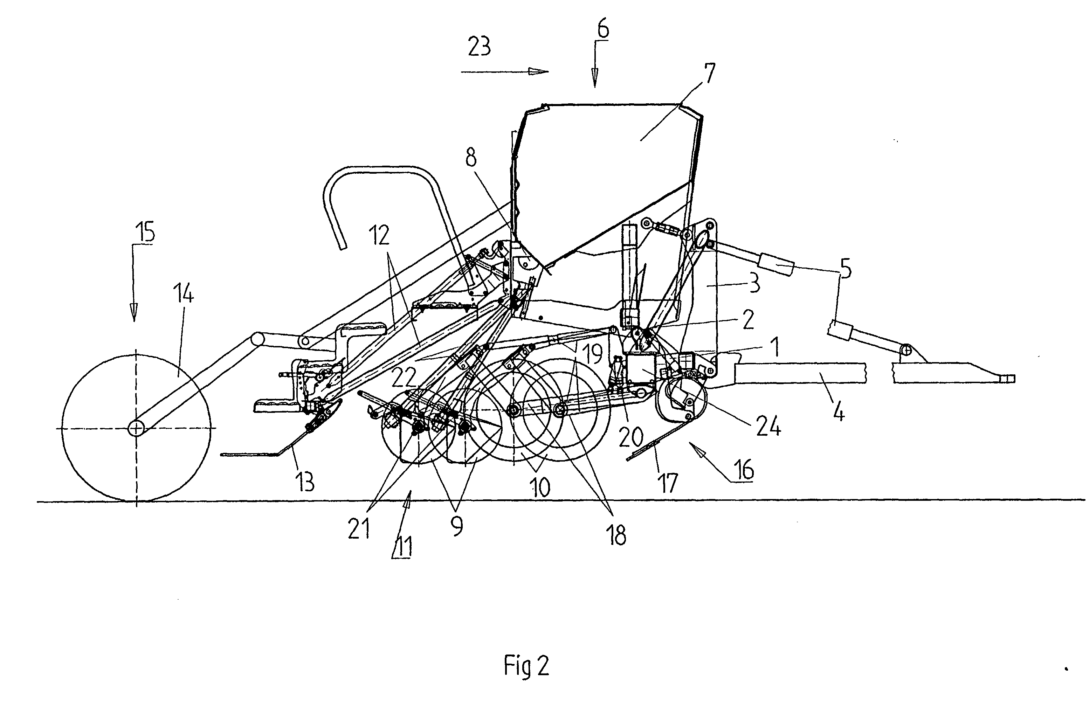

Um die Sävorrichtung 11 beim Wenden am Feldende aus dem Boden zu heben bzw. auf Straßen und Wegen transportieren zu können, wird über den Dreipunktkraftheber die Deichsel 4 angehoben. Gleichzeitig werden über die nicht dargestellte motorische Schwenkvorrichtung die Laufräder 14 des Fahrwerkes 15 abgesenkt, so daß die Sävorrichtung gemäß Fig. 2 aus dem Boden gehoben wird, so daß die Bodenbearbeitungswerkzeuge 16, die Walzenräder 10, die Säschare 9 und der Saatstriegel 13 vom Boden frei kommen. Falls die Stütze 5 als Hydraulikzylinder ausgebildet ist, kann das Ausheben auf der Vorderseite der Maschine durch das Verschwenken der Zugdeichsel 4 erfolgen.

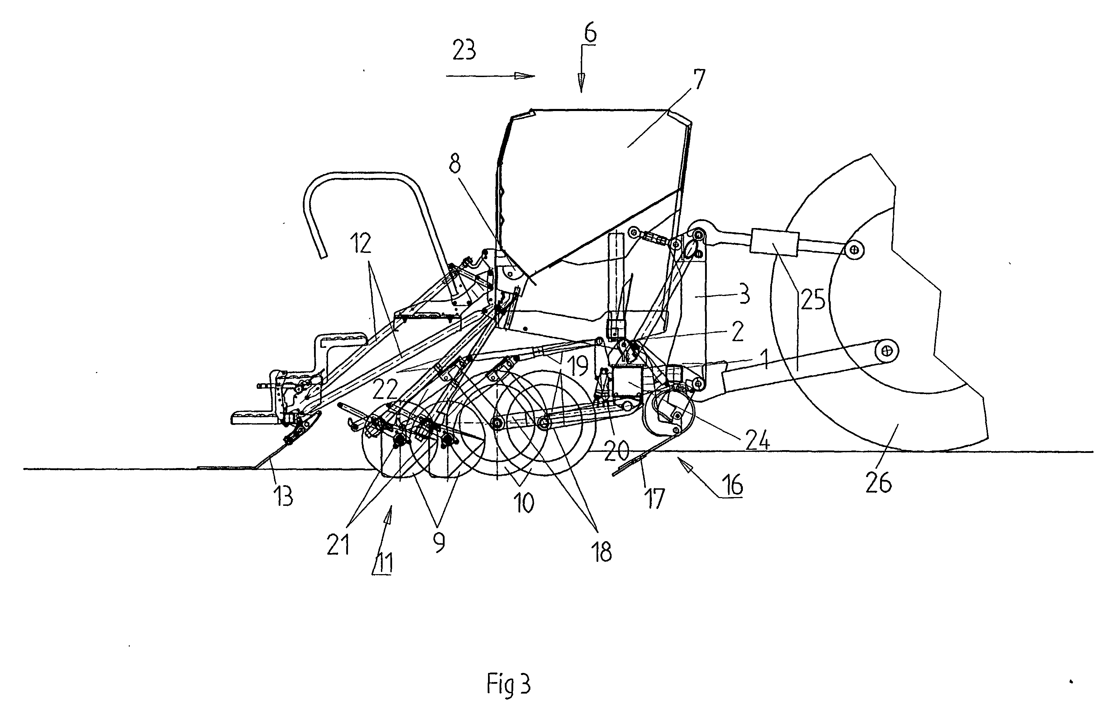

Die Sävorrichtung gemäß Fig. 3 unterscheidet sich von der Sävorrichtung gemäß den Figuren 1 und 2 dadurch, daß diese Sävorrichtung als Dreipunktanbaumaschine ausgebildet ist. Der an dem Tragrahmen 1 befestigte Dreipunktanbaurahmen 3 ist direkt an dem Dreipunktkraftheber 25 der Achsschleppers 26 über die Kuppelelemente bzw. Befestigungselemente angeordnet. Die Eindringtiefe der Säschare 9 in den Boden läßt sich durch Längenveränderung des Oberlenkers 27 des Dreipunktkrafthebers 25 bzw. durch Verschenken des Tragbalkens 24 gegenüber dem Tragrahmen 1 in nicht dargestellter Weise einstellen. Darüber hinaus ist an dem Tragrahmen 1 das die Laufräder 14 aufweisende Fahrwerk 15 nicht angeordnet.

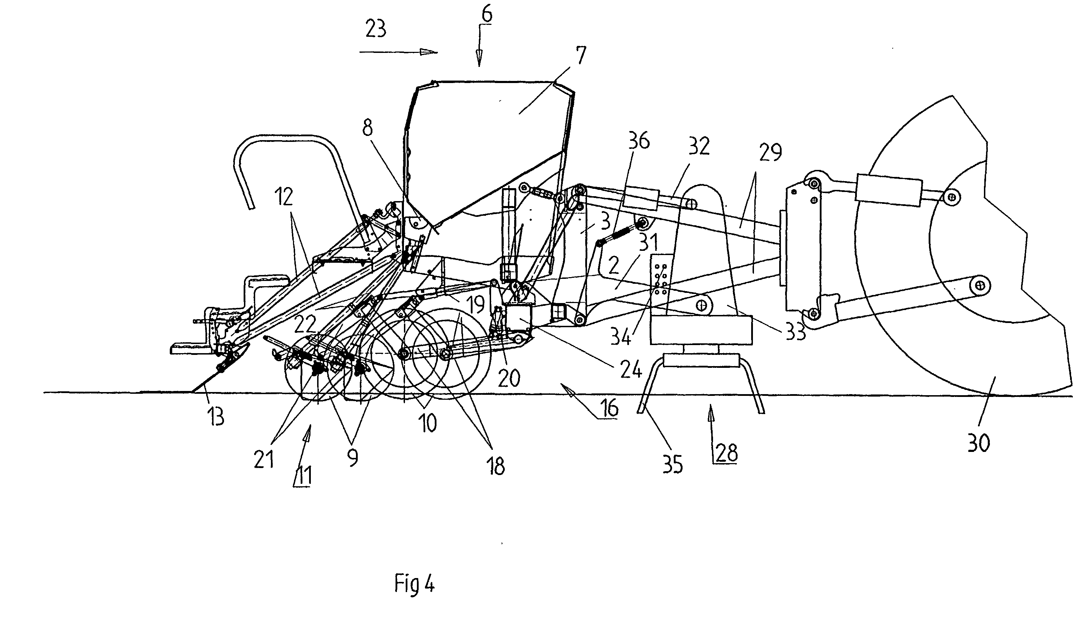

Die Fig. 4 zeigt eine weitere Säkombination mit einer Sävorrichtung. Hierbei unterscheidet sich diese Sävorrichtung von der Sävorrichtung gemäß Fig. 3 dadurch, daß vor dem Dreipunktanbaurahmen 3 das motorisch angetriebene Bodenbearbeitungsgerät 28 mittels der Anbauvorrichtung 29 zwischen dem Kuppelrahmen 3 der Sävorrichtung 6 und dem Ackerschlepper 30 angeordnet ist. Dieses motorisch angetriebene Bodenbearbeitungsgerät 28 kann als Kreiselegge, Kreiselgrubber, Rüttelegge etc. ausgebildet sein und wird über eine nicht dargestellte Gelenkwelle von der Zapfwelle des Ackerschleppers 30 angetrieben. Das Bodenbearbeitungsgerät 28 ist über die unteren Lenker 31 und den oberen Lenker 32 in Höhenrichtung bewegbar angeordnet. Über die zwischen dem Rahmen 33 der Bodenbearbeitungsmaschine 28 und dem unteren Lenker 31 angeordnete Höheneinstelleinrichtung 34 kann die Arbeitstiefe der Arbeitswerkzeuge 35 der Bodenbearbeitungsmaschine 28 in den Boden eingestellt werden, wobei das Bodenbearbeitungsgerät 28 in der Höhe über die Walzenräder 10 geführt wird. Zwischen den unteren Lenker 31 und dem Kuppelrahmen 29 ist die Feder 36 der Belastungseinrichtung angeordnet werden, die einerseits das Bodenbearbeitungsgerät 28 in Richtung des Bodens zieht und andererseits als Dämpfungselement dient.

## Patentansprüche

1. Säkombination, bestehend aus einem Tragrahmen mit Vorratsbehälter (7) und einer Säschare (9) mit zugeordneten Tiefenführungsrollen (10) aufweisenden Sävorrichtung (11), vor der Sävorrichtung (11) am Tragrahmen (1) angeordneten Bodenbearbeitungswerkzeugen (16, 17) und einer an der Vorderseite des Tragrahmens (1) angeordneten Kuppeleinrichtung (3), **dadurch gekennzeichnet, daß** die Sävorrichtung (11) aus einer aus mehreren nebeneinander angeordneten und unabhängig voneinander in Höhenrichtung zueinander bewegbaren Walzenrädem (10) bestehenden Walze und den Walzenrädem (10) zugeordneten Säscharen (9) besteht, daß die Walzenräder (10) mittels Halterungen (19) an einem quer zur Fahrtrichtung (23) verlaufenden Tragbalken (24) angelenkt sind, daß die Säschare (9) hinter den Walzenrädem (10) mittels Haltearme (21) an den Halterungen (19) der Walzenräder (10) angeordnet sind, und dass die Kuppeleinrichtung einen Dreipunktanbaubock (3) aufweist.

2. Säkombination nach Anspruch 1, **dadurch gekennzeichnet, daß** der Tragrahmen (1) auf seiner Vorderseite ein Befestigungselement (2, 3) aufweist, an welchem wahlweise eine Zugdeichsel (4) oder ein Dreipunktanbaubock (3) befestigbar ist.

3. Säkombination nach einem oder mehreren der vorstehenden Ansprüche, **dadurch gekennzeichnet, daß** an der Rückseite des Tragrahmens (1) ein anhebbar und absenkbare Laufräder (14) aufweisendes Fahrwerk (15) anordbar ist.

4. Säkombination nach Anspruch 3, **dadurch gekennzeichnet, daß** das Fahrwerk (14, 15) mittels hydraulischer Zylinder anhebund absenkbar ist.

5. Säkombination nach einem oder mehreren der vorstehenden Ansprüche, **dadurch gekennzeichnet, daß** den Säscharen (9) und Tiefenführungsrollen (10) eine zentrale Einstelleinrichtung zur Einstellung der Eindringtiefe der Säschare (9) in den Boden zugeordnet ist.

6. Säkombination nach einem oder mehreren der vorstehenden Ansprüche, **dadurch gekennzeichnet, daß** die Säschare (9) hinter den Walzenrädem (10) mittels Haltearme (21) über Gelenkverbindungen an den Halterungen (19) der Walzenräder (10) angeordnet und mittels zwischen den Halterungen (19) und den Haltearmen (21) angeordneten Federeinrichtungen in Richtung des Bodens drückbar sind.

7. Säkombination nach einem oder mehreren der vorstehenden Ansprüche, **dadurch gekennzeichnet, daß** die Halterung (19) der Walzenräder (10) parallelogrammartig ausgebildet ist.

8. Säkombination nach einem oder mehreren der vorstehenden Ansprüche, **dadurch gekennzeichnet, daß** jedem Walzenrad (10) zwei Säschare (9) zugeordnet sind.

9. Säkombination nach einem oder mehreren der vorstehenden Ansprüche, **dadurch gekennzeichnet, daß** die Säschare (9) als Einscheibenschare ausgebildet sind.

10. Säkombination nach einem oder mehreren der vorstehenden Ansprüche, **dadurch gekennzeichnet, daß** die parallelogrammartigen Halterungen (19) an einem sich quer zur Fahrtrichtung (23) erstreckenden Tragbalken (24) mittels Gelenke angelenkt sind, daß der Tragbalken (24) mittels Kuppeleinrichtungen an dem Tragrahmen angebracht ist, daß über die Kuppeleinrichtung der Tragbalken (24) um eine quer zur Fahrtrichtung (23) verlaufende Achse verschwenkbar und in verschiedene Stellungen einstellbar ist.

## Claims

1. Combination seed drill, comprising a supporting frame with hopper (7) and a drilling apparatus (11) which includes sowing coulters (9) with associated depth guide rollers (10), ground cultivating tools (16, 17), which are disposed on the supporting frame (1) in front of the drilling apparatus (11), and a coupling device (3), which is disposed at the front of the supporting frame (1), **characterised in that** the drilling apparatus (11) comprises a roller, which comprises a plurality of roller wheels (10), which are disposed adjacent one another and are vertically displaceable independently of one another one relative to the other, and the sowing coulters (9), which are associated with the roller wheels (10), **in that** the roller wheels (10) are pivotally mounted by means of mountings (19) on a supporting beam (24), which extends transversely relative to the direction of travel (23), **in that** the sowing coulters (9) are disposed behind the roller wheels (10) by means of retaining arms (21) on the mountings (19) of the roller wheels (10), and **in that** the coupling device includes a three-point coupling member (3).

2. Combination seed drill according to claim 1, **characterised in that** the supporting frame (1) includes at its front a securing member (2, 3), to which a towing bar (4) or a three-point coupling member (3) is selectively securable.

3. Combination seed drill according to one or more of the preceding claims, **characterised in that** a framework (15), which includes a raisable and lowerable roll (14), is disposable at the rear of the supporting frame (1).

4. Combination seed drill according to claim 3, **characterised in that** the framework (14, 15) is raisable and lowerable by means of hydraulic cylinders.

5. Combination seed drill according to one or more of the preceding claims, **characterised in that** a central adjusting device for adjusting the depth of penetration of the sowing coulters (9) In the ground is associated with the sowing coulters (9) and depth guide rollers (10).

6. Combination seed drill according to one or more of the preceding claims, **characterised in that** the sowing coulters (9) are disposed behind the roller wheels (10) by means of retaining arms (21) via universal connections on the mountings (19) of the roller wheels (10) and are pressable in the direction of the ground by means of springloaded devices, which are disposed between the mountings (19) and the retaining arms (21).

7. Combination seed drill according to one or more of the preceding claims, **characterised in that** the mounting (19) of the roller wheels (10) is in the form of a parallelogram.

8. Combination seed drill according to one or more of the preceding claims, **characterised in that** two sowing coulters (9) are associated with each roller wheel (10).

9. Combination seed drill according to one or more of the preceding claims, **characterised in that** the sowing coulters (9) are in the form of single disc coulters.

10. Combination seed drill according to one or more of the preceding claims, **characterised in that** the parallelogram-like mountings (19) are pivotally mounted by means of universal joints on a supporting beam (24), which extends transversely relative to the direction of travel, **in that** the supporting beam (24) is mounted on the supporting frame by means of coupling devices, and **In that**, via the coupling device, the supporting beam (24) is pivotable about an axis which extends transversely relative to the direction of travel (23) and is adjustable into various positions.

## Revendications

1. Ensemble combiné de semoir composé d'un châssis équipé d'un réservoir (7) et d'un dispositif de semoir (11) comportant un soc de semoir (9) et des rouleaux de guidage en profondeur (10), associés, ainsi que des outils de travail du sol (16, 17) installés sur le châssis (1) en amont du dispositif de semoir (11) et une installation d'attelage (3) prévue sur le côté avant du châssis (1),
**caractérisé en ce que**
le dispositif de semoir (11) se compose d'un rouleau formé de plusieurs roues de rouleau (10) juxtaposées et mobiles en hauteur indépendamment les unes des autres, ainsi que de socs de semoir (9) associés aux roues de rouleau (10),
les roues de rouleau (10) sont articulées par des supports (19) à une poutre de support (24) dirigée transversalement à la direction de déplacement (23) et
les socs de semoir (9) sont montés derrière les roues de rouleau (10) par l'intermédiaire de bras de fixation (21) sur des supports (19) des roues de rouleau (10) et
l'installation d'attelage comporte un bloc d'attelage à trois points (3).

2. Ensemble combiné de semoir selon la revendication 1,
**caractérisé en ce que**
le châssis (1) comporte un élément de fixation (2, 3) sur le côté avant, qui reçoit au choix un timon (4) ou un bloc d'attelage à trois points (3).

3. Ensemble combiné de semoir selon une ou plusieurs des revendications précédentes,
**caractérisé en ce qu'**
un châssis de roulement (15) comportant des roues de sustentation (14) susceptibles d'être soulevées et abaissées est prévu sur le côté arrière du châssis (1).

4. Ensemble combiné de semoir selon la revendication 3,
**caractérisé en ce que**
le châssis de roulement (14, 15) peut se lever et s'abaisser à l'aide d'un vérin hydraulique.

5. Ensemble combiné de semoir selon une ou plusieurs des revendications précédentes,
**caractérisé en ce que**
les socs de semoir (9) et les rouleaux de guidage en profondeur (10) sont équipés d'une installation de réglage centralisée pour régler la profondeur de pénétration des socs de semoir (9) dans le sol.

6. Ensemble combiné de semoir selon une ou plusieurs des revendications précédentes,
**caractérisé en ce que**
les socs de semoir (9) sont montés derrière les roues de rouleau (10) sur les supports (19) des roues de rouleau (10) par l'intermédiaire de bras de fixation (21) et de liaisons articulées, et les socs sont appuyés en direction du sol par des ressorts prévus entre les fixations (19) et les bras de fixation (21).

7. Ensemble combiné de semoir selon une ou plusieurs des revendications précédentes,
**caractérisé en ce que**
la fixation (19) des roues de rouleau (10) est en forme de parallélogramme.

8. Ensemble combiné de semoir selon une ou plusieurs des revendications précédentes,
**caractérisé en ce que**
deux socs de semoir (9) sont associés à chaque roue de rouleau (10).

9. Ensemble combiné de semoir selon une ou plusieurs des revendications précédentes,
**caractérisé en ce que**
les socs de semoir (9) sont des socs mono-disque.

10. Ensemble combiné de semoir selon une ou plusieurs des revendications précédentes,
**caractérisé en ce que**
les fixations (19) en forme de parallélogrammes sont articulées par des articulations à une poutre de support (24) s'étendant transversalement à la direction de déplacement (23), la poutre de support (24) est montée sur le châssis par l'intermédiaire d'installations d'attelage,
l'installation d'attelage de la poutre de support (24) peut basculer autour d'un axe dirigé transversalement à la direction de déplacement (23) et se régler dans différentes positions.
